# DEMANDE DE BREVET EUROPEEN

(11) **EP 4 002 406 A1**
(43) Date de publication de la demande: **25.05.2022**
(21) Numéro de dépôt: 21207314.2
(22) Date de dépôt: 09.11.2021
(51) Int. Cl.: H01G 11/26, H01G 11/56, H01G 11/70, H01G 11/74, H01G 11/84

(54) **DISPOSITIF ÉLECTROCHIMIQUE TEL UNE MICRO BATTERIE**

(30) Priorité: 13.11.2020 FR 2011643
(71) Demandeur: Commissariat à l'Energie Atomique et aux Energies Alternatives, 75015 Paris (FR)
(72) Inventeur: BAZIN, Arnaud, 38054 GRENOBLE Cedex 09 (FR); GEFFRAYE, Françoise, 38054 GRENOBLE Cedex 09 (FR); OUKASSI, Sami, 38054 GRENOBLE Cedex 09 (FR); PONCET, Séverine, 38054 GRENOBLE Cedex 09 (FR)
(74) Mandataire: Decobert, Jean-Pascal

(57) **Abrégé**

L'invention concerne un dispositif électrochimique comprenant, empilés successivement sur une face d'un substrat (1), au moins:
- un premier collecteur (2) de courant comprenant au moins une couche métallique,
- une première électrode (3),
- un électrolyte (4),
- une deuxième électrode (5),

Le premier collecteur de courant (2) comprend une première portion recouverte par la première électrode (3) et une deuxième portion (22) débordant latéralement au-delà de la première électrode (3), et
L'électrolyte (4) comprend une surface recouverte par la deuxième électrode (5),
La deuxième portion (22) du premier collecteur (2) s'étend sous l'électrolyte (4) dans une région de l'électrolyte (4) située hors de la surface recouverte par la deuxième électrode (5).

## Description

### DOMAINE TECHNIQUE

La présente invention concerne le domaine des dispositifs électrochimiques, disposant de parties d'électrode et de collecteur de courant, dans le domaine du stockage d'énergie par voie électrochimique.

L'invention trouve pour application avantageuse, mais non limitative, la fabrication de dispositifs microélectroniques. Par dispositif microélectronique, on entend tout type de dispositif réalisé avec les moyens de la microélectronique. Ces dispositifs englobent notamment en plus des dispositifs à finalité purement électronique, des dispositifs micromécaniques ou électromécaniques (MEMS, NEMS...) ainsi que des dispositifs optiques ou optoélectroniques (MOEMS...).

Un intérêt spécifique non limitatif de l'invention est la réalisation de dispositifs de stockage d'énergie électrochimique. Cela inclut notamment les dispositifs du type batterie à électrolyte solide, avantageusement de petite taille, par exemple de moins de 20 (voire moins de 10) mm².

### ETAT DE LA TECHNIQUE

Une microbatterie est un dispositif électrochimique composé de deux électrodes (positive et négative) séparées par un isolant électrique (l'électrolyte).

La miniaturisation des dispositifs nomades (objets connectés, implants médicaux,...) implique de pouvoir produire des sources d'énergie de petite taille (en particulier quelques mm²) capables de stocker une quantité d'énergie suffisante. La capacité d'une microbatterie est directement proportionnelle au volume de l'électrode positive.

En termes de performances électrique, la résistance interne d'une microbatterie est un facteur essentiel qui dépend essentiellement de :
- la conductivité électronique de l'électrolyte solide ;
- la défectivité générée par le procédé de fabrication ;
- l'architecture de la microbatterie.

Dans le cas particulier de microbatteries avec une forte épaisseur de cathode (par exemple plus de 10µm), cela implique :
- une conductivité électronique optimisée (épaisseur d'électrolyte souvent importante, telle que 3µm au moins) ;
- une défectivité du procédé de fabrication optimisée (réduction des trous sous forme d'épingle, de la rugosité, des résidus) ;
- une architecture contrainte (taux de remplissage élevé, superposition des couches maximale).

On constate un défaut spécifique dû à l'architecture et qui dégrade fortement les performances et le rendement des microbatteries : l'apparition, au niveau du collecteur de courant positif, d'aiguilles métalliques en bord de puces qui provoquent des courts-circuits.

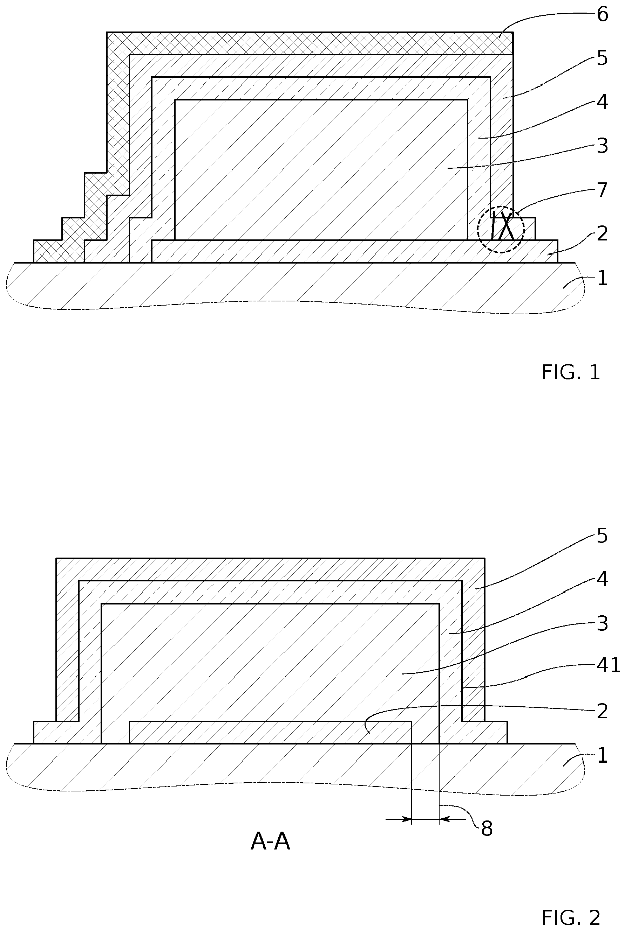

En termes de fabrication des systèmes de stockage d'énergie électrochimique tels que des microbatteries, comme le montre la figure 1 illustrant un empilement conventionnel de micro batterie, ces empilements sont de manière générale réalisés par des dépôts successifs sur un substrat 1 d'un premier collecteur de courant 2, d'une première électrode 3, d'un électrolyte 4 (ou conducteur ionique), d'une deuxième électrode 5, et d'un deuxième collecteur de courant 6. Une encapsulation, par le biais de dépôt de couches supplémentaires, ou par report de capot, est souvent nécessaire pour protéger le système de la réactivité chimique avec l'oxygène et la vapeur d'eau. Les collecteurs 2, 6 présentent chacun une portion de prise de contact, restant accessible par l'extérieur de la micro batterie pour son raccordement électrique, par exemple en employant des plots.

La migration d'un ou plusieurs ions entre les deux électrodes 3, 5 à travers l'électrolyte 4 permet soit de stocker de l'énergie ou de la délivrer vers un circuit externe.

La figure 1 montre par ailleurs le lieu où peut apparaître le défaut sous forme d'aiguilles dans l'empilement de couches ainsi fabriquées. En effet, dans la zone repérée 7, on constate un phénomène de croissance d'éléments métalliques issus d'une couche métallique du premier collecteur 2 dans une partie de ce dernier s'étendant latéralement pour assurer une portion de reprise de contact, sous forme d'aiguilles. Traversant l'électrolyte 4, de telles aiguilles sont susceptibles de créer des courts-circuits entre le premier collecteur et la deuxième électrode.

Par exemple, le document US 2019/0051944 A1 décrit une méthode de fabrication d'une structure empilée de batterie dont chaque couche de batterie comprend un élément de batterie de type film. Cependant, l'élément de batterie divulgué dans ce document comprend des régions où se trouvent consécutivement et dans la direction d'empilement un collecteur de courant, un électrolyte et une électrode, ce qui peut provoquer des courts-circuits.

Un objet de la présente invention est donc de proposer une solution à ce problème de courts-circuits, sans pénaliser l'efficacité de l'architecture de l'empilement, en particulier pour conserver la possibilité de disposer d'un volume de cathode et de surfaces de contact importantes entre les couches empilées.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, selon un mode de réalisation on prévoit un dispositif électrochimique comprenant, empilés successivement sur une face d'un substrat, au moins:
- un premier collecteur de courant comprenant au moins une couche métallique,
- une première électrode,
- un électrolyte,
- une deuxième électrode.

Le premier collecteur de courant comprend une première portion recouverte par la première électrode et une deuxième portion débordant latéralement au-delà de la première électrode, et
L'électrolyte comprend une surface recouverte par la deuxième électrode ; éventuellement, l'électrolyte comprend une portion de flanc s'étendant suivant la direction d'empilement, une surface de la portion de flanc étant recouverte par la deuxième électrode.

La deuxième portion du premier collecteur s'étend sous l'électrolyte dans une région de l'électrolyte située hors de la surface de l'électrolyte, ce qui inclut éventuellement une surface de la portion de flanc, recouverte par la deuxième électrode.

On résout ainsi les problèmes de courts-circuits tout en conservant une surface d'échange optimale entre l'anode et la cathode. Cela repose sur une architecture de microbatterie telle que la première électrode (généralement positive) couvre la totalité du périmètre du collecteur de courant positif, sauf sur une zone de reprise de contact. On peut ainsi arranger pour que le premier collecteur ne soit jamais surmonté, suivant la direction d'empilement, par la deuxième électrode, avec comme seule interface l'électrolyte. En évitant un tel sandwich de l'électrolyte par le premier collecteur et la deuxième électrode, on évite les courts-circuits.

Ainsi, la plus grande partie du premier collecteur de courant est très largement isolée relativement au reste de l'empilement, de sorte à prévenir les courts-circuits pouvant être dus à des aiguilles crues à partir du premier collecteur. Une partie réduite du premier collecteur sert de portion de prise de contact, raccordable à l'extérieur, et fait l'objet d'une architecture spécifique de l'empilement à son endroit, de sorte à ce que la deuxième électrode (et d'autres couches électriquement conductrices éventuelles telles qu'un deuxième collecteur) ne surmonte pas cette portion du premier collecteur. Si des aiguilles sont formées, elles n'auront pas de conséquences néfastes sur le fonctionnement du dispositif électrochimique.

Un autre aspect concerne une méthode de fabrication d'un dispositif électrochimique, comprenant une formation d'un empilement comprenant suivant une direction d'empilement successivement sur une face d'un substrat, au moins:
- un premier collecteur de courant comprenant au moins une couche métallique,
- une première électrode,
- un électrolyte,
- une deuxième électrode,

dans lequel le premier collecteur de courant comprend une première portion recouverte par la première électrode et une deuxième portion débordant latéralement au-delà de la première électrode, et
dans lequel l'électrolyte comprend une surface recouverte par la deuxième électrode,
caractérisé en ce que la formation de la deuxième électrode comprend un dépôt d'une couche de deuxième électrode, un masquage de définition d'une région non masquée de la couche de deuxième électrode, région non masquée dans laquelle la deuxième portion du premier collecteur s'étend sous l'électrolyte, et un enlèvement de la couche de deuxième électrode dans la région non masquée, configuré pour former la deuxième électrode sur l'électrolyte en dehors de la région non masquée, de sorte que la deuxième portion du premier collecteur soit située hors de la surface de l'électrolyte recouverte par la deuxième électrode.. On peut ainsi avoir recours aux techniques de photolithographie de couche(s), et de gravure de parties non masquées de telle(s) couche(s) pour définir le motif de la deuxième électrode.

Un autre aspect concerne aussi des microbatteries présentant la structure du dispositif électrochimique.

Est aussi présenté une méthode configurée pour fabriquer un tel dispositif électrochimique.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente un exemple d'empilement d'un dispositif électrochimique selon l'état de la technique.
La figure 2 représente une vue en coupe selon les lignes A-A de la figure 4, montrant un mode de réalisation de l'invention indicatif.
La figure 3 représente une vue en coupe selon les lignes B-B de la figure 4, montrant un mode de réalisation de l'invention indicatif.
La figure 4 présente une vue de dessus d'un dispositif électrochimique dans un mode de réalisation de l'invention indicatif.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les épaisseurs ne sont pas forcément représentatives de la réalité.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
- suivant une possibilité, l'électrolyte 4 comprend une portion de flanc s'étendant suivant la direction d'empilement et la région de l'électrolyte situé hors de la surface recouverte de l'électrolyte par la deuxième électrode comprend une surface, dite surface non recouverte, de la portion de flanc ;
- éventuellement, la deuxième électrode 5 comprend une portion de couverture d'une face supérieure de l'électrolyte 4, la portion de couverture étant en retrait relativement à une bordure supérieure d'un flanc 31 de la première électrode 3, le flanc 31 s'étendant suivant la direction d'empilement ; ce retrait étend situé dans la continuité de la surface non recouverte de la portion de flanc de l'électrolyte 4;
- la région de l'électrolyte 4 située hors de la surface recouverte par la deuxième électrode 5 s'étend suivant toute la hauteur, suivant la direction d'empilement, de l'électrolyte 4 ;
- la première portion du premier collecteur 2 est intégralement recouverte par la première électrode 3.
- la deuxième portion 22 du premier collecteur 2 est une patte.
- le premier collecteur 2 comprend une couche de platine.
- le premier collecteur 2 comprend une couche de titane recouverte par la couche de platine.
- la surface de la portion de flanc recouverte par la deuxième électrode 5 est d'une superficie supérieure à 90% de la superficie totale de la portion de flanc de l'électrolyte 4.
- globalement, la surface non recouverte de l'électrolyte peut représenter moins de 10 % de sa surface totale.

Préférentiellement, le procédé de fabrication est tel que le masquage est configuré pour former en outre une zone non masquée d'une face supérieure de l'électrolyte dans la continuité d'une partie de la région non masquée située au niveau d'un flanc de l'électrolyte, l'enlèvement de la couche de la deuxième électrode étant configuré pour former une portion de couverture de la face supérieure de l'électrolyte, avec un retrait relativement à une bordure d'un flanc de la première électrode..

Il est précisé que, dans le cadre de la présente invention, le terme « sur » ou « au-dessus » ne signifie pas obligatoirement « au contact de ». Ainsi, par exemple, le dépôt d'une couche sur une autre couche, ne signifie pas obligatoirement que les deux couches sont directement au contact l'une de l'autre mais cela signifie que l'une des couches recouvre au moins partiellement l'autre en étant, soit directement à son contact, soit en étant séparée d'elle par un film, ou encore une autre couche ou un autre élément. Cela étant, les couches de premier collecteur, de première électrode, d'électrolyte, la deuxième électrode et de deuxième collecteur s'empilent de préférence avec des surfaces de contact successives.

Une couche peut par ailleurs être composée de plusieurs sous-couches d'un même matériau ou de matériaux différents.

On entend par un substrat, un élément, une couche ou autre « à base » d'un matériau M, un substrat, un élément, une couche comprenant ce matériau M uniquement ou ce matériau M et éventuellement d'autres matériaux, par exemple des éléments d'alliage, des impuretés ou des éléments dopants. Le cas échéant, le matériau M peut présenter différentes stœchiométries.

Il est précisé que dans le cadre de la présente invention, l'épaisseur d'une couche ou du substrat se mesure selon une direction perpendiculaire à la surface selon laquelle cette couche ou ce substrat présente son extension maximale. L'empilement du dispositif électrochimique est opéré suivant cette direction. Une direction latérale s'entend comme dirigée perpendiculairement à l'épaisseur du substrat. Notamment, le retrait que présente la deuxième électrode sur la face supérieure de l'électrolyte est avantageusement dirigé suivant cette direction latérale.

Certaines parties du dispositif de l'invention peuvent avoir une fonction électrique. Certaines sont employées pour des propriétés de conduction électrique et on entend par électrode, collecteur ou équivalent, des éléments formés d'au moins un matériau ayant une conductivité électrique suffisante, dans l'application, pour réaliser la fonction souhaitée. À l'inverse, on entend par isolant électrique ou diélectrique un matériau qui, dans l'application, assure une fonction d'isolation électrique.

Selon l'invention, comme le montrent les figures 2 à 4, on réalise un dispositif comprenant pour le moins, sur un substrat 1 et sous l'électrolyte 4, un premier collecteur de courant 2 et une première électrode 3.

Au sens de la présente demande, le terme collecteur s'entend d'une partie du dispositif ayant pour fonction de raccorder une électrode à un élément extérieur au dispositif, c'est-à-dire situé à l'extérieur de l'empilement de couches du dispositif, généralement encapsulées. Le terme électrode s'entend quant à lui d'une partie du dispositif en continuité électrique avec une couche active (en particulier un électrolyte 4, de préférence solide, pour le cas du stockage électrochimique). Le collecteur de courant est raccordé à son électrode de sorte à établir une continuité électrique entre ces deux parties ; ces dernières peuvent en outre être issues d'une ou plusieurs couches communes de matériaux ; dans ce cas, le collecteur formera généralement une excroissance de l'électrode, vers l'extérieur du dispositif encapsulé. Cette excroissance peut être moins large que l'électrode elle-même, il peut s'agir d'une bande conductrice étroite dirigée latéralement relativement à l'empilement.

D'une manière générale, l'invention comprend un empilement de couches permettant de réaliser les différents composants d'un organe de stockage électrochimique. Dans ce cas, l'empilement comprend lui-même un premier collecteur 2, une première électrode 3, un électrolyte 4 (réalisé de manière avantageuse par un conducteur ionique solide), une deuxième électrode 5 et, généralement, un deuxième collecteur qui n'est pas représenté sur les figures 2 à 4. Ce deuxième collecteur peut suivre exactement le même profil que la deuxième électrode 5, avec éventuellement une portion latérale supplémentaire au niveau du substrat, qui est généralement le lieu de la reprise de contact.

L'électrolyte 4 est une portion intercalée entre les deux portions conductrices séparées constituées respectivement du premier collecteur 2 et de la première électrode 3, et de la deuxième électrode 5 et du deuxième collecteur. Des échanges ioniques entre ces deux portions conductrices s'opèrent au travers de l'électrolyte, avantageusement solide, suivant le principe de stockage d'énergie électrochimique.

Le substrat est par exemple en verre ou en silicium et peut comprendre une couche superficielle isolante si la base du substrat est électriquement conductrice.

Le premier collecteur 2 comprend au moins une couche métallique, susceptible de créer des aiguilles. De préférence, la au moins couche métallique comprend une couche de titane ou à base de titane. En complément, ou alternativement, là au moins une couche métallique comprend une couche de platine. De préférence, le premier collecteur 2 comprend ou consiste en un empilement successif d'une couche de titane surmontée d'une couche de platine. L'épaisseur du premier collecteur peut être supérieure à 200 µm et/ou inférieure à 350 µm.

Comme le montre la figure 2, le premier collecteur 2 comporte une première portion qui est intégralement recouverte, y compris suivant sa tranche, par la première électrode 3. La dimension repérée 8 correspond à l'écartement minimal entre la tranche de la première portion du premier collecteur 2 et la surface interne de l'électrolyte 4. Elle peut être d'au moins 1 µm, voire d'au moins 5 µm. Par ailleurs, le premier collecteur 2 comprend une deuxième portion 22, de préférence d'une surface bien plus réduite que la première portion, et s'étendant latéralement vers l'extérieur de l'empilement pour permettre une reprise de contact électrique.

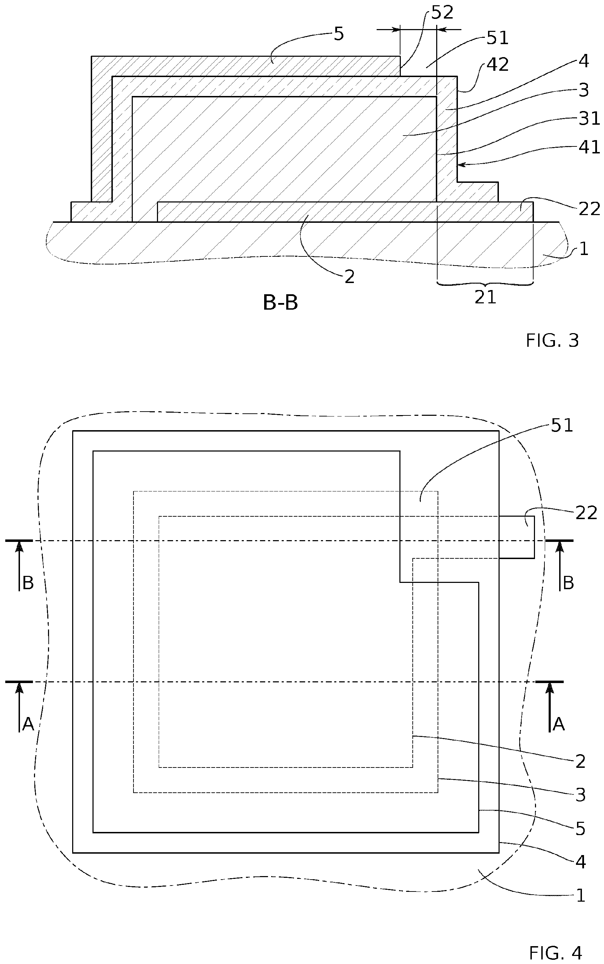

La figure 3 révèle ce débord latéral de la portion 22, sur une distance repérée 21 relativement au bord de la première électrode 3. Cette distance 21 est par exemple supérieure à 200 µm.

La portion 22, comme visible de dessus en figure 4, déborde du reste de l'empilement pour être accessible par l'extérieur. De préférence, une surface supérieure de cette portion est exposée à côté de l'empilement, pour une prise de contact. Cet arrangement est reflété par la figure 4. Ainsi, la deuxième portion 22 du premier collecteur 2 peut être une patte faisant saillie latéralement (par exemple d'au moins 50µm) pour être accessible au-delà de l'empilement. Par exemple, la largeur de cette patte peut être supérieure à 50 µm et/ou inférieure à 200 µm.

Le matériau de la première électrode 3 peut être du LICO mais plus préférentiellement du LiCoO2 (contraction du terme Lithium-Cobalt. On donne en outre ci-après des exemples de matériaux aussi utilisables pour la première électrode 3 : V2O5, TiS2, LiMn2O4, NaMnO2, NaCoO2...

L'électrolyte 4 solide ou un matériau super-ionique à base de verre sont parmi les meilleurs candidats pour les électrolytes solides inorganiques applicables à toute batterie tout-solide. Il a été développé un grand choix de sulfures et de systèmes vitreux d'électrolyte d'oxysulfure, ainsi qu'une série de verre-céramique super-ionique de sulfure Li2S-P2S5, dont la conductivité d'ion de Li+ est comparable à celle des électrolytes liquides. En ce qui concerne l'électrolyte pour les batteries au sodium, il existe la même famille de verre, par exemple Na3PS4.

La deuxième électrode 5, typiquement l'anode, peut par exemple être en silicium. Le deuxième collecteur qui la recouvre préférentiellement peut être en cuivre ou en titane.

La première électrode 3 est de préférence assez épaisse, par exemple au moins 10 µm et largement recouverte par la couche active d'électrolyte 8, notamment sur la face supérieure de la première électrode 7 mais aussi sur ses flancs.

En conséquence, l'électrolyte 4 comporte une face supérieure, surmontant la face supérieure de la première électrode 3 suivant la direction de l'empilement, et un flanc 41 qui correspond à une partie de la couche d'électrolyte 4 couvrant un flanc 31 équivalent de la première électrode 3. Le flanc 41 est dirigé, au moins majoritairement, suivant la direction de l'empilement. De préférence, et comme le révèle la figure 2, l'électrolyte 4 entoure complètement la première électrode 3. De cette façon, la surface d'échange est optimale.

De même, la deuxième électrode 5 recouvre largement l'électrolyte 4 sur sa face supérieure, mais aussi sur son flanc 41. De par cette configuration, une partie latérale (ou flanc) de la deuxième électrode 5 se prolonge en direction de la face supérieure du substrat 1 si bien qu'il pourrait y avoir contact avec le premier collecteur de courant 2. Pour éviter une telle situation, on a recours à la disposition particulière représentée aux figures 2 à 4.

Comme le montre la figure 2, en dehors de la zone de passage de la deuxième portion 22 du premier collecteur 2, l'électrolyte 4 présente une surface de flanc 41 qui est recouverte par la deuxième électrode 5. De préférence, cette couverture descend jusqu'au pied de la couche d'électrolyte 4, de sorte que la hauteur de l'électrolyte est entièrement couverte.

Dans le même temps, dans la zone de l'empilement au niveau de laquelle la portion 22 du premier collecteur 2 s'étend latéralement, l'électrolyte 4 n'est pas recouvert par la deuxième électrode 5, notamment au niveau du flanc 41. En effet, à cet endroit, la deuxième électrode 5 ne descend pas sur le flanc 41. Dans l'exemple de la figure 3, la deuxième électrode 5 s'arrête, à cet endroit (dans la zone où la portion 22 s'étend en dehors de la partie couverte par la première électrode 3), sur la face supérieure de l'électrolyte 4, sans présenter de portion dirigée suivant l'épaisseur de l'empilement. En outre, comme dans le cas illustré, la tranche 52 de la deuxième électrode y présente un retrait 51 relativement à une bordure supérieure du flanc 31 de la première électrode 3 ; en particulier, la première électrode 3 comprend préférentiellement une surface supérieure elle-même recouvertes par la face supérieure de l'électrolyte 4. La jonction entre la surface supérieure de la première électrode 3 et le flanc 31 forme une bordure vis-à-vis de laquelle la tranche 52 est en retrait dans la zone de l'empilement dans laquelle la deuxième portion 22 du premier collecteur 2 fait saillie latéralement, au-delà de la première électrode 3. Ainsi, la deuxième électrode 5 ne surmonte pas la deuxième portion 22 du deuxième collecteur 2 même au-dessus de la largeur de la portion de flanc de l'électrolyte 4 ; autrement dit, la deuxième électrode 5 ne s'étend pas sur la face supérieure de l'électrolyte 4 dans une zone située au droit du flanc 31 et du flanc 42. Par exemple, le retrait 51 peut présenter une dimension d'au moins 5µm suivant au moins une direction dans un plan perpendiculaire à la direction d'empilement, correspondant avantageusement au plan de la face supérieure de l'électrolyte 4.

La figure 4, vue de dessus, reflète la combinaison de ces deux modalités de couverture opérée par la deuxième électrode 5. La deuxième portion 22 du premier collecteur 2 y est présentée sous la forme d'une patte débordant de la première portion du premier collecteur, qui dispose ici d'une section rectangulaire, et plus particulièrement carrée.

Toujours dans cet exemple, la cathode formant la première électrode 3 enrobe la totalité du premier collecteur 2, sauf dans la partie de la deuxième portion 22 formant une saillie latérale. Dans cet exemple, la section de la deuxième électrode 3 est homothétique de celle de la première portion du premier collecteur 2 (d'une manière générale, il peut s'agir d'une section rectangulaire, voire carrée).

L'électrolyte 4 parcourt la surface supérieure de la première électrode 3 en suivant le contour. Comme le montrent aussi les figures 2 et 3, l'électrolyte 4 s'étend aussi sur la face du substrat 1 présentant ainsi une forme en L formée par son flanc 41 et son pied en appui sur la face du substrat.

Hormis le caractère saillant de la deuxième portion 22, le profil de ces couches empilées est avantageusement régulier et les recouvrements successifs sont de préférence intégraux.

Il en va différemment de la deuxième électrode 5. Pour une large part, la deuxième électrode 5 recouvre la face supérieure et le flanc 41 de l'électrolyte 4 de sorte qu'une bonne partie de sa surface surmonte l'électrolyte 4. Cependant, dans la région de passage de la deuxième portion 22, la deuxième électrode 5 forme un écorché de sorte à ce qu'elle ne recouvre pas le flanc 41 de l'électrolyte 4 ni une zone de la face supérieure de l'électrolyte 4. Ce dégagement correspond à la zone de retrait 51.

La partie non recouverte par la deuxième électrode 5 du flanc 41 s'étend au droit de la deuxième portion 22 et, de préférence, un peu autour, par exemple pour couvrir une largeur de flanc 41 d'au moins 1,5 fois la largeur de la deuxième portion 22.

Dans le cas représenté, la deuxième portion 22 est formée par un seul élément, mais ce cas n'est pas limitatif et le dégagement dans la deuxième électrode 5 peut être adapté en conséquence et en fonction de la forme de la deuxième portion 22.

Typiquement, pour le dépôt des couches de l'empilement, on peut utiliser une technique de dépôt physique en phase vapeur connue sous le vocable anglais PVD pour Physical Vapor Déposition.

Suivant un exemple, la fabrication enchaîne les étapes suivantes :
Un motif de premier collecteur est d'abord formé sur la face du substrat. Le deuxième collecteur peut lui-même être déposé en une ou plusieurs couches d'un ou plusieurs matériaux ; il peut s'agir d'une couche sous-jacente de titane recouverte d'une couche de platine. De préférence, ces couches sont planes.

La première électrode est déposée sur le premier collecteur 2. De préférence, son épaisseur est plus importante.

Similairement, l'électrolyte 4 est déposé. Compte tenu de l'épaisseur de la première électrode 2, ce dépôt est configuré pour couvrir une partie supérieure et une partie de flanc de la première électrode. Avantageusement, on utilise une technique de dépôt conforme. L'épaisseur est par exemple d'au moins 3 µm.

De préférence, on procède alors à la formation d'une couche de deuxième électrode. On définit ensuite, par masquage, un motif de formation de la deuxième électrode, en réservant une portion de l'électrolyte 4 qui ne sera pas recouverte par cette deuxième électrode. Le masquage peut couvrir une portion du flanc 41 de l'électrolyte, et éventuellement une portion attenante de la surface supérieure de l'électrolyte. L'épaisseur est par exemple d'au moins 150 nm, éventuellement plus de 200 nm et/ou moins de 500 nm. Les parties non masquées vont permettre de définir des zones d'enlèvement la ou les couches de matériau destiné à former la deuxième électrode.

On pourra typiquement employer des techniques de photolithographie pour définir un tel motif. Comme précédemment, la deuxième électrode 5 peut être réalisée par un dépôt. L'enlèvement pourra se faire par des techniques de gravure conventionnelle.

Comme indiqué auparavant, d'autres couches peuvent surmonter cet ensemble. En particulier, un deuxième collecteur peut recouvrir la deuxième électrode. On prendra soin alors à ce que la zone de l'électrolyte 4 laissée découverte par la deuxième électrode 5 ne soit pas recouverte par le deuxième collecteur.

L'architecture ainsi construite a l'avantage, par rapport à l'état de la technique connu, de minimiser les risques de défaillances de la microbatterie tout en optimisant les surfaces d'échange entre les matériaux actifs.

Les microbatteries réalisées selon cette architecture présentent des taux de court-circuit inférieurs à 5%, contre plus de 70% avant le changement d'architecture.

L'invention n'est pas limitée aux modes de réalisations précédemment décrits et s'étend à tous les modes de réalisation couverts par l'invention.

## Revendications

1. Dispositif électrochimique comprenant, empilés successivement sur une face d'un substrat (1) selon une direction d'empilement, au moins:
- un premier collecteur (2) de courant comprenant au moins une couche métallique,
- une première électrode (3),
- un électrolyte (4),
- une deuxième électrode (5),
dans lequel le premier collecteur de courant (2) est constitué d'une première portion et d'une deuxième portion, la première portion étant recouverte par la première électrode (3) et la deuxième portion (22) débordant latéralement au-delà de la première électrode (3), et
dans lequel l'électrolyte (4) comprend une surface recouverte par la deuxième électrode (5),
**caractérisé en ce que** la deuxième portion (22) du premier collecteur (2) s'étend sous l'électrolyte (4) uniquement dans une région de l'électrolyte (4) située hors de la surface de l'électrolyte (4) recouverte par la deuxième électrode (5).

2. Dispositif selon la revendication précédente, dans lequel l'électrolyte (4) comprend une portion de flanc s'étendant suivant la direction d'empilement, la région de l'électrolyte (4) située hors de la surface recouverte de l'électrolyte (4) comprenant une surface non recouverte de la portion de flanc, dans lequel la deuxième électrode (5) comprend une portion de couverture d'une face supérieure de l'électrolyte (4), la portion de couverture étant en retrait relativement à une bordure supérieure d'un flanc (31) de la première électrode (3) s'étendant suivant la direction d'empilement dans la continuité de la surface non recouverte de la portion de flanc de l'électrolyte (4).

3. Dispositif selon la revendication précédente, dans lequel la surface de la portion de flanc recouverte par la deuxième électrode (5) est d'une superficie supérieure à 90% de la superficie totale de la portion de flanc de l'électrolyte (4).

4. Dispositif selon l'une quelconque des revendications précédentes, dans lequel la région de l'électrolyte (4) située hors de la surface recouverte par la deuxième électrode (5) s'étend suivant toute la hauteur, suivant la direction d'empilement, de l'électrolyte (4).

5. Dispositif selon l'une quelconque des revendications précédentes, dans lequel la première portion du premier collecteur (2) est intégralement recouverte par la première électrode (3).

6. Dispositif selon l'une quelconque des revendications précédentes, dans lequel la deuxième portion (22) du premier collecteur (2) est une patte.

7. Dispositif selon l'une quelconque des revendications précédentes, dans lequel le premier collecteur (2) comprend une couche de platine.

8. Dispositif selon la revendication précédente, dans lequel le premier collecteur (2) comprend une couche de titane recouverte par la couche de platine.

9. Méthode de fabrication d'un dispositif électrochimique tel que défini dans l'une quelconque des revendications 1 à 8, comprenant une formation d'un empilement comprenant successivement, selon une direction d'empilement, sur une face d'un substrat (1), au moins:
- un premier collecteur de courant (2) comprenant au moins une couche métallique,
- une première électrode (3),
- un électrolyte (4),
- une deuxième électrode (5),
dans lequel le premier collecteur (2) de courant est constitué d'une première portion recouverte par la première électrode (3) et d'une deuxième portion (22) débordant latéralement au-delà de la première électrode (3), et
dans lequel l'électrolyte (4) comprend une surface recouverte par la deuxième électrode (5),
**caractérisé en ce que** la formation de la deuxième électrode (5) comprend un dépôt d'une couche de deuxième électrode, un masquage de définition d'une région non masquée de la couche de deuxième électrode, région non masquée dans laquelle la deuxième portion (22) du premier collecteur (2) s'étend sous l'électrolyte (4), et un enlèvement de la couche de deuxième électrode dans la région non masquée, configuré pour former la deuxième électrode (5) sur l'électrolyte (4) en dehors de la région non masquée, de sorte que la deuxième portion (22) du premier collecteur (2) soit située uniquement hors de la surface de l'électrolyte (4) recouverte par la deuxième électrode (5).

10. Méthode selon la revendication précédente, dans lequel le masquage est configuré pour former en outre une zone non masquée d'une face supérieure de l'électrolyte (4) dans la continuité d'une partie de la région non masquée située au niveau d'un flanc de l'électrolyte (4), l'enlèvement de la couche de la deuxième électrode (5) étant configuré pour former une portion de couverture de la face supérieure de l'électrolyte (4), avec un retrait relativement à une bordure d'un flanc (31) de la première électrode (3).
